(19) Europäisches Patentamt
European Patent Office
Office européen des brevets

(11) EP 2 928 650 B1

(12) FASCICULE DE BREVET EUROPEEN

(45) Date de publication et mention
de la délivrance du brevet:
02.12.2020 Bulletin 2020/49

(21) Numéro de dépôt: 13789791.4

(22) Date de dépôt: 12.11.2013

(51) Int Cl.:
B25J 17/02 (2006.01)        B25J 18/06 (2006.01)
B25J 9/00 (2006.01)

(86) Numéro de dépôt international:
PCT/EP2013/073618

(87) Numéro de publication internationale:
WO 2014/076079 (22.05.2014 Gazette 2014/21)

(54) **SYSTÈME HEXAPODE**

SECHSFÜSSIGES SYSTEM

HEXAPOD SYSTEM

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR

(30) Priorité: 14.11.2012 FR 1260851

(43) Date de publication de la demande:
14.10.2015 Bulletin 2015/42

(73) Titulaire: **Commissariat à l'Énergie Atomique
et aux Énergies Alternatives**
75015 Paris (FR)

(72) Inventeurs:
• **REY, Frédéric**
  **F-04860 Pierrevert (FR)**
• **ALOUANI, Slim**
  **F-13090 Aix en Provence (FR)**

(74) Mandataire: **Hautier, Nicolas**
**Cabinet Hautier**
**20, rue de la Liberté**
**06000 Nice (FR)**

(56) Documents cités:
FR-A2- 2 565 882        US-A- 4 848 179
US-A1- 2009 314 119      US-A1- 2012 048 156

EP 2 928 650 B1

**Description**

DOMAINE TECHNIQUE DE L'INVENTION

L'invention concerne le domaine de la robotique et plus particulièrement celui des robots comprenant des systèmes hexapodes. Elle trouve pour application non limitative mais particulièrement avantageuse le domaine de l'inspection et de la réparation des réacteurs nucléaires.

ÉTAT DE LA TECHNIQUE

Dans certains domaines comme le nucléaire par exemple, l'utilisation de robots toujours plus précis et robustes est de plus en plus importante. En effet, dans un souci croissant d'améliorer la sécurité des réacteurs nucléaires, le recours aux robots semble particulièrement séduisant pour effectuer des missions d'inspection et/ou de réparation alors que le réacteur est en service (ces missions sont usuellement qualifiées d'ISIR pour « *In Service Inspection and Repair»* qui signifie en français inspection et réparation en cours de service). Ces robots peuvent également intervenir sur des chantiers de déconstruction d'installations (principalement de démantèlement nucléaire) et aussi lors d'accidents nucléaires ou plus généralement d'accidents industriels rendant inaccessibles, sauf à engendrer un risque important pour des opérateurs humains, des zones où il s'agit d'intervenir.

Typiquement, ces robots doivent être capables d'embarquer des capteurs, des outils de mesure et de réparation dans un bloc nucléaire et plus précisément en immersion dans le sodium de la cuve d'un réacteur à neutrons rapides à caloporteur sodium.

Les robots utilisés actuellement sont généralement montés sur une perche manipulée depuis l'extérieur de la cuve principale du réacteur. Les principaux accès à l'intérieur de cette cuve sont situés sur la dalle. On peut introduire par ces accès des mécanismes d'inspection ou de réparation. Ces solutions sont globalement satisfaisantes lorsque les zones à inspecter sont faciles d'accès. Il n'avait jusqu'à présent jamais été exigé d'accéder aux parties immergées les plus profondes de ce type de réacteur. Compte tenu des évolutions de réglementations, l'Autorité de Sûreté Nucléaire exige maintenant que l'on puisse inspecter tout ou partie de ces zones. Les moyens employés jusqu'à présent ne permettent pas cela.

Les besoins croissants en termes de sécurité exigent donc qu'au cours des missions d'ISIR les robots doivent accéder à des zones difficiles d'accès dans le bloc réacteur. En outre ces zones difficiles d'accès peuvent parfois se situer à une distance relativement importante du point d'entrée du robot dans le réacteur.

Les solutions connues faisant intervenir des perches ne permettent pas de positionner le robot dans des zones difficiles d'accès et ne sont donc pas adaptées aux exigences élevées en termes d'ISIR.

Par ailleurs, certains réacteurs imposent aux robots un environnement particulièrement contraignant. Tel est le cas des réacteurs à caloporteurs de 4ème génération. Notamment dans ce type de réacteur, le caloporteur est généralement du sodium. Ce métal est chimiquement très réactif. De plus, comme de l'eau, le sodium exercerait une pression hydrostatique significative sur un robot qui serait immergé. En outre la température du caloporteur demeure relativement élevée pour maintenir ce dernier à l'état liquide et satisfaire aux exigences de limitation de fatigue thermiques des structures internes de la cuve principale. Le réacteur ASTRID (*Advanced Sodium Technological Reactor for Industrial Demonstration*) constitue un exemple de ce type de réacteur.

Ces contraintes élevées rendent insatisfaisantes des solutions basées sur des articulations pivot montées en série. Ce type de solutions ne s'avère en effet pas suffisamment robuste dans des environnements contraignants tels que les réacteurs à caloporteur de sodium ou présente des capacités de charge trop réduites.

Par ailleurs, des articulations basées sur des hexapodes n'offrent pas une capacité de charge suffisante lorsque la force à générer par l'articulation, typiquement le déplacement d'une masse disposée sur une platine supérieure de l'hexapode, est non perpendiculaire à cette platine. En effet, un effort tranchant est inévitablement induit par cette force. Cet effort tranchant doit être repris par les actionneurs linéaires ce qui au mieux réduit leur capacité de charge, et au pire entraine une rupture de l'articulation. Ce type de solutions n'est donc pas non plus satisfaisant.

Une solution présentant un seul hexapode est décrite dans le document US2012/0048156. Plus précisément, le document US2012/0048156 décrit une plateforme mobile comprenant six actionneurs linéaires présentant chacun deux extrémités en liaison rotule avec un support, la plateforme formant un hexapode.

Les documents suivants décrivent des bras articulés pour des applications spécifiques et non prévus pour le milieu nucléaire ou pour les milieux extrêmes : US2009/0314119, US4848179. Le document US2009/0314119 décrit un bras articulé comprenant une structure de reprise d'effort encastrée dans un support à l'une de ses extrémités et en liaison rotule avec un autre support à l'autre de ses extrémités.

Il existe donc un besoin consistant à proposer une articulation pour robot qui soit précise, robuste et qui permette une bonne capacité de charge quelle que soit l'orientation de cette charge. La présente invention a pour objet de proposer une solution qui réponde à ce besoin.

Les autres objets, caractéristiques et avantages de la présente invention apparaîtront à l'examen de la description suivante et des dessins d'accompagnement. Il est entendu que d'autres avantages peuvent être incorporés.

## RÉSUMÉ DE L'INVENTION

Pour atteindre cet objectif, la présente invention propose un système hexapode selon la revendication 1.

Ainsi, le système permet de reprendre efficacement des efforts tranchants qui seraient appliqués au deuxième support tout en conservant une mobilité du deuxième support par rapport au premier support selon au moins deux degrés de liberté en rotation. Le positionnement du centre de rotation de la rotule permet en outre de supprimer le bras de levier entre la rotule et le deuxième support et donc de réduire les efforts s'exerçant inutilement sur les actionneurs linéaires. Grâce à la présente invention, ceux-ci ne sont donc sollicités que pour produire les efforts nécessaires au mouvement souhaité. A capacité équivalente de déploiement d'efforts perpendiculaires au deuxième support, la reprise des efforts tranchants par la structure de reprise d'effort permet de réduire le poids et l'encombrement de l'hexapode selon l'invention par rapport à un hexapode de l'art antérieur. L'articulation formée par l'hexapode de l'invention offre donc une capacité de charge améliorée tout en étant précise, robuste et en présentant un encombrement limité.

Selon un autre mode de réalisation, l'invention porte sur un robot par exemple d'inspection et/ou de réparation, caractérisé en ce qu'il comprend un bras selon la revendication 1 équipé d'au moins une et de préférence de plusieurs articulations montées en série et comprenant chacune un premier et un deuxième support et au moins trois et de préférence six actionneurs linéaires. Chaque actionneur linéaire présentant deux extrémités articulées respectivement au premier et au deuxième support par une liaison rotule. Chaque articulation comprend également une structure de reprise d'effort d'une part encastrée sur le premier support et d'autre part couplée au deuxième support par une liaison rotule. De manière préférée et particulièrement avantageuse le centre de rotation de cette liaison rotule est situé dans l'épaisseur du deuxième support.

L'invention permet ainsi de réaliser un robot comprenant un bras poly-articulé dans lequel l'effort tranchant induit par le poids des différents systèmes hexapodes est repris en majeure partie par la structure de reprise d'effort. Un robot équipé d'une articulation selon l'invention présente ainsi une capacité de charge accrue tout en permettant une bonne dextérité. Le bras robotisé peut ainsi présenter une longueur relativement grande tout en présentant un encombrement réduit. Il peut donc être utilisé pour accéder à des zones difficiles d'accès et pour des opérations nécessitant une capacité de charge élevée.

Avantageusement, ce robot est un robot d'inspection et/ou de réparation configuré pour réaliser des inspections de centrales nucléaires. Il est également utilisable pour des opérations de démantèlement ou d'intervention en milieu hostile.

Selon un mode de réalisation avantageux mais non limitatif, le robot comprend un bras équipé de plusieurs articulations disposées en série. De manière avantageuse, chaque articulation forme un hexapode muni de la structure de reprise d'effort. De manière avantageuse, deux systèmes hexapodes juxtaposés partagent un même support.

## BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :

La FIGURE 1 est un schéma illustrant un hexapode selon l'art antérieur soumis à une force sensiblement perpendiculaire aux platines. Cette figure illustre également le bilan des forces mises en jeu sur un actionneur dans ce cas de charge.
La FIGURE 2 est un schéma illustrant un hexapode selon l'art antérieur soumis à une force sensiblement parallèle aux platines. Cette figure illustre également le bilan des forces mises en jeu sur un actionneur dans ce cas de charge.
La FIGURE 3 est un schéma illustrant un hexapode selon l'art antérieur soumis à une force sensiblement parallèle aux platines et appliqué en point déporté de la platine supérieure.
La FIGURE 4 est un schéma illustrant un premier mode de réalisation de l'invention vue en coupe.
La FIGURE 5 illustre un deuxième mode de réalisation de l'invention vue de côté.
La FIGURE 6 est une coupe du deuxième mode de réalisation illustré en figure 4.
La FIGURE 7 illustre, un mode de réalisation dans lequel la structure de reprise d'effort est creuse.
La FIGURE 8 illustre, de manière schématique, un exemple de bras poly-articulé selon l'invention qui est équipé d'une gaine.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier les dimensions relatives des différents éléments ne sont pas représentatives de la réalité.

## DESCRIPTION DÉTAILLÉE DE L'INVENTION

Avant d'entamer une revue détaillée de modes de réalisation de l'invention, sont énoncées ci-après des caractéristiques optionnelles qui peuvent éventuellement être utilisées en association ou alternativement :

- Avantageusement, le centre de rotation de la liaison rotule articulant la structure de reprise d'effort sur le deuxième support est situé entre deux plans coupant le deuxième support, lesdits deux plans étant parallèles entre eux et parallèles à un plan défini par deux axes de rotation Rx, Ry perpendiculaires entre eux et autour desquels le deuxième support est mis en rotation par rapport au premier support en maintenant le premier support fixe. L'axe Rz est l'axe de l'éventuelle rotation propre du deuxième support, c'est-à-dire la rotation du deuxième support sur lui-même. La structure de reprise d'effort s'étend selon une direction principale. Typiquement, la direction Rz est la direction principale selon laquelle la structure de reprise d'effort. La direction Rz est la direction définie par la droite passant par la liaison encastrement et le centre de rotation de la liaison rotule couplant la structure de reprise d'effort sur le deuxième support. Cette direction est donc fixe quelle que soit le déploiement des actionneurs linéaires.

- Avantageusement, le centre des liaisons rotules par lesquelles les actionneurs linéaires sont articulés au premier support sont coplanaires. Le plan défini par le centre des liaisons rotules par lesquelles les actionneurs linéaires sont articulés au premier support est parallèle à deux plans, parallèles entre eux, traversant le deuxième support et entre lesquels est situé le centre de rotation de la liaison rotule couplant la structure de reprise d'effort sur le deuxième support.

- Le contour du deuxième support définit une enveloppe externe et ledit centre de rotation de la liaison rotule formée par le deuxième support et la structure de reprise d'effort est situé à l'intérieur de cette enveloppe.

Le centre de rotation de la liaison rotule est idéalement localisé dans le plan médian du deuxième support.

- De préférence, le deuxième support présente une face interne tournée vers la structure de reprise d'effort et une face externe opposée à la face interne et dans lequel ledit centre de rotation est situé entre les faces interne et externe, idéalement dans un plan médian à ces deux faces.

- De préférence, le centre de rotation de la liaison rotule couplant la structure de reprise d'effort sur le deuxième support est située à égale distance de la face externe et de la face interne du deuxième support, soit au milieu de l'épaisseur du deuxième support.

- Selon un mode de réalisation non limitatif, la face interne et la face externe sont planes.

- De préférence, les actionneurs linéaires et la structure de reprise assurent à eux seuls l'articulation mécanique entre le premier et de deuxième support. Il n'y a donc pas d'autres éléments prévus pour déplacer ou retenir les deux supports entre eux.

- Selon un mode de réalisation non limitatif, la structure de reprise d'effort est un bras de liaison dont une première extrémité est encastrée sur le premier support et dont une deuxième extrémité est couplée au deuxième support par une liaison rotule. De préférence, la structure de reprise d'effort est un tube.

- Selon un mode de réalisation, l'invention prévoit une articulation basée sur une articulation de type plateforme de Stewart et intégrant d'autres caractéristiques telles qu'une structure de reprise des efforts tranchants.

- Les actionneurs linéaires sont des bras rétractables. Les actionneurs linéaires sont par exemple des vérins hydrauliques, des vérins pneumatiques ou des vérins à vis etc.

- Les actionneurs linéaires ne comprennent pas de liaison pivot ou rotule autre que la liaison rotule permettant leur couplage aux premier et deuxième supports. Un actionneur linéaire, pris isolément, est donc mobile uniquement en translation et éventuellement en rotation autour de son axe de translation.

- Le premier support est rigide. Il ne comprend pas d'articulation autre que celles avec des éléments extérieurs auquel il est connecté (actionneurs, structure de reprise d'effort par exemple). De même, le deuxième support est rigide. Il ne comprend pas d'articulation autre que celle avec des éléments extérieurs auquel il est connecté.

- Avantageusement, ledit centre de rotation de la liaison rotule formée par le deuxième support et la structure de reprise d'effort est situé au centre d'un cercle formé par les liaisons rotules par lesquelles les actionneurs linéaires sont articulés sur le deuxième support.

- Avantageusement, la structure de reprise d'effort est encastrée sur le premier support au centre d'un cercle formé par les liaisons rotules par lesquelles les actionneurs linéaires sont articulés sur le premier support.

- Avantageusement, les liaisons rotules par lesquelles les actionneurs linéaires sont articulés au premier support présentent chacune un centre de rotation qui est situé dans l'épaisseur du premier support. Ainsi, le centre de rotation des liaison rotules couplant les actionneurs au premier support est situé entre deux plans passant par le premier support, lesdits deux plans étant parallèles entre eux et parallèles à un plan défini par deux axes de rotation Rx, Ry perpendiculaires entre eux et autour desquels le deuxième support est déplacé en rotation par rapport au premier support en maintenant le premier support fixe. De préférence, le centre de rotation des liaison rotules couplant les actionneurs au premier support est situé entre deux plans passant par le premier support, lesdits deux plans étant parallèles entre eux et perpendiculaires à l'axe Rz passant d'une part par la liaison encastrement entre la structure de reprise d'effort et le premier support et passant d'autre part par le centre de la liaison rotule couplant la structure de reprise d'effort sur le deuxième support. Avantageusement, le bras de levier entre les liaisons rotule et le premier support est réduit, limitant de ce fait les efforts générés sur le premier support et les rotules.

- Avantageusement, les liaisons rotules par lesquelles les actionneurs linéaires sont articulés au deuxième support présentent un centre de rotation qui est situé dans l'épaisseur du deuxième support. Avantageusement, le bras de levier entre les liaisons rotule et le deuxième support est réduit, limitant de ce fait les efforts générés sur le deuxième support et les rotules.

- Selon un mode de réalisation non limitatif, au moins l'un parmi le premier et le deuxième support forme une platine. Ainsi, le centre de rotation de la rotule couplant la structure de reprise d'effort à la deuxième platine est compris dans l'épaisseur $e_2$ de la platine. L'épaisseur $e_2$ peut se définir par une dimension entre deux points du deuxième support prise selon une direction parallèle à la direction principale selon laquelle la structure de reprise d'effort s'étend. Avantageusement la distance entre une face externe ou interne du deuxième support et le centre de la liaison rotule couplant la structure de reprise d'effort sur le deuxième support est égale à $e_2/2$.

- Selon un mode de réalisation non limitatif, au moins un support pris parmi le premier et le deuxième support du système hexapode comporte un connecteur configuré pour coopérer avec une extrémité d'une structure de reprise d'effort de manière à former respectivement un encastrement et une liaison rotule

- Avantageusement, le connecteur est également configuré pour coopérer avec une structure de reprise d'effort additionnelle de manière à former : une liaison encastrée avec l'une parmi la structure de reprise d'effort et la structure de reprise d'effort additionnelle ; une liaison rotule avec l'autre parmi la structure de reprise d'effort et la structure de reprise d'effort additionnelle. Ainsi, un même connecteur est commun à deux articulations.

- Selon un mode de réalisation au moins l'un parmi le premier et le deuxième support comporte un connecteur configuré pour coopérer avec ladite structure de reprise d'effort de manière à former ensemble ledit encastrement, respectivement ladite liaison rotule, le connecteur étant en outre configuré de manière à coopérer avec une deuxième structure de reprise d'effort d'un deuxième système hexapode, les deux systèmes hexapodes étant montés en série, de manière à former avec cette deuxième structure de reprise d'effort une liaison rotule, respectivement un encastrement, le même connecteur coopérant ainsi avec les structures de reprise d'effort de deux systèmes hexapodes montés en série. Ainsi, le premier support comporte un connecteur configuré pour coopérer avec ladite structure de reprise d'effort couplée au premier support par une liaison encastrement de manière à former ladite liaison encastrement, le premier connecteur étant en outre configuré de manière à coopérer avec une autre structure de reprise d'effort d'un autre système hexapode de manière à former avec cette autre structure de reprise d'effort une liaison rotule, un même connecteur coopérant ainsi simultanément avec les structures de reprise d'effort de deux hexapodes montés en série. De même le deuxième support comporte un connecteur configuré pour coopérer avec ladite structure de reprise d'effort couplée au deuxième support par une liaison rotule de manière à former ladite liaison rotule, le deuxième connecteur étant en outre configuré de manière à coopérer avec une autre structure de reprise d'effort d'un autre système hexapode de manière à former avec cette autre structure de reprise d'effort une liaison encastrée, un même connecteur coopérant ainsi simultanément avec les structures de reprise d'effort de deux hexapodes montés en série. Ainsi l'assemblage et la réparation du bras articulé comportant de multiples systèmes hexapodes sont facilités.

- Selon un mode de réalisation le connecteur forme une pièce monolithique.

- Selon un mode de réalisation, les structures de reprise d'effort de deux systèmes hexapodes sont solidarisées aux supports par les connecteurs uniquement.

- Selon un mode de réalisation, le support comportant le connecteur est commun aux deux systèmes hexapodes montés en série.

- Selon un mode de réalisation, les actionneurs des deux systèmes hexapodes sont articulés en rotation sur le support commun.

- Selon un mode de réalisation, le support commun forme une pièce monolithique.

- Selon un mode de réalisation, la structure de reprise d'effort présente une première extrémité au niveau de laquelle la structure de reprise d'effort est encastrée sur le premier support et une deuxième extrémité au niveau de laquelle la structure de reprise d'effort est couplée au deuxième support par une rotule et dans lequel les première et deuxième extrémités de la structure de reprise d'effort sont solidaires. Ainsi, une liaison rigide relie les première et deuxième extrémités. Ces dernières ne sont pas articulées.

- Selon un mode de réalisation, la structure de reprise d'effort s'étend d'un support à l'autre d'une même articulation.

- Selon un mode de réalisation, la structure de reprise d'effort s'étend selon une direction principale perpendiculaire au plan dans lequel s'étend chaque support. La structure de reprise d'effort s'étend de manière sensiblement linéaire.

- Selon un mode de réalisation, chaque système hexapode comprend une unique structure de reprise d'effort.

- Selon un mode de réalisation, la structure de reprise d'effort comporte un tube creux portant une rotule creuse. Le connecteur est creux en son centre. Le système est configuré de manière à ménager un canal de passage traversant la structure de reprise d'effort et les premier et deuxième supports. Le canal de passage passe par le centre des supports. Le bras poly-articulé équipé d'une pluralité de systèmes hexapodes comprend au moins un câble ou au moins un conduit passant à travers le canal de passage de chacun des systèmes hexapodes. Les canaux de passage de chacun des systèmes hexapodes du bras forment un canal de passage continu.

Selon un autre mode de réalisation, l'invention porte sur un robot comprenant un bras poly-articulé équipé d'une pluralité de systèmes hexapodes selon l'invention et dans lequel les systèmes hexapodes sont montés en série.

Selon un mode de réalisation non limitatif, le robot est un robot d'inspection et/ou de réparation configuré pour réaliser des inspections de centrales nucléaires.

Selon un mode de réalisation non limitatif, le robot est un robot de démantèlement et/ou d'intervention dans un milieu hostile.

Selon un mode de réalisation, le bras poly-articulé comprend au moins trois systèmes hexapodes montés en série pour autoriser des mouvements du bras selon au moins deux axes de rotation. L'invention propose ainsi un bras poly-articulé avec une robustesse et une capacité de charge améliorées et avec une capacité de mouvement selon au moins deux degrés de liberté en rotation par articulation.

Selon un mode de réalisation avantageux, le bras articulé comprend une gaine étanche, déformable, enveloppant au moins une pluralité d'articulations. La gaine est conformée pour suivre le mouvement du bras poly-articulé et pour être maintenue à distance des actionneurs linéaires et des liaisons rotule quel que soit le mouvement du bras poly-articulé.

Ainsi, l'invention propose un bras robotisé présentant au moins deux degrés de liberté en rotation par articulation selon deux axes perpendiculaires à la direction principale selon laquelle s'étend le bras. Il s'est avéré que la gaine étanche présente une résistance à l'usure et une durée de vie bien supérieure aux gaines enveloppant les bras robotisés des solutions connues décrites dans la section relative à l'art antérieur.

Dans le cadre du développement de la présente invention, il a été observé que dans les solutions connues, les centres des rotations se situent à l'intérieur de la gaine ce qui induit des rayons de courbure très faibles et concentre donc les contraintes sur des zones réduites de la gaine. Au fur et à mesure des rotations générées par les articulations, la fatigue de ces zones s'accroit très rapidement et des ruptures apparaissent. Avec le bras robotisé selon l'invention, les centres de rotation de chaque articulation sont repoussés à l'extérieur de la gaine ou tout au moins en dehors de l'articulation.

Les sollicitations appliquées à la gaine sont donc réparties de manière plus homogène suivant sa longueur. On limite, voire on supprime alors les zones de forte fatigue. La résistance à la fatigue et la durée de vie de la gaine sont alors améliorées.

L'invention offre ainsi une solution fiable, robuste et simple pour améliorer la protection des articulations par rapport au milieu environnant dans lequel elles évoluent.

En outre, cette solution présente l'avantage d'empêcher le contact du sodium avec le mécanisme du bras robotisé. Cela limite considérablement les zones de rétention possible de sodium et réduit la difficulté liée à un nettoyage et une décontamination du bras robotisé. Cela est particulièrement utile quand le bras a terminé son travail dans la cuve et qu'il en est ressorti. Il doit alors être nettoyé voire entretenu et maintenu et cela est facilité par la présence limitée de sodium.

L'invention apporte une solution particulièrement efficace pour former des bras poly-articulés destinés à des missions d'ISIR dans des réacteurs nucléaires. Elle est particulièrement avantageuse dans les réacteurs à caloporteur sodium de 4$^{ème}$ génération.

Selon un mode de réalisation avantageux, la gaine est de préférence conformée pour être maintenue à distance des actionneurs linéaires et des liaisons rotule quel que soit le mouvement du bras articulé. Ainsi, même lorsqu'une pression extérieure est appliquée sur la gaine, par exemple une pression ponctuelle appliquée sur l'enveloppe externe de la gaine ou par exemple une pression de l'environnement extérieur à la gaine, cette dernière est maintenue à distance des actionneurs des articulations. Il n'y a donc pas de contact entre la gaine et les rotules couplant les actionneurs linéaires aux supports ou entre la gaine et un vérin ou sa tige formant l'actionneur.

Selon un mode de réalisation avantageux, la gaine présente de préférence un volume qui ne peut pas être modifié sensiblement par l'effet d'une pression extérieure comme par exemple la pression liée à une immersion dans un liquide ou par une pression ponctuelle. Ainsi, même si le bras est immergé dans un liquide ou est disposé dans un fluide sous pression, la gaine conserve un volume qui est fixé par des considérations géométriques et n'est pas influencé par la pression. De préférence, le volume de la gaine est constant.

De manière avantageuse, cela permet d'éviter que sous l'effet de la pression la gaine n'entre au contact des articulations ce qui pourrait la déchirer ou endommager les actionneurs linéaires.

En outre, et de manière également avantageuse, cela permet d'augmenter la poussée d'Archimède s'exerçant sur le bras, par rapport à une solution reposant sur une gaine compressible. La poussée d'Archimède s'oppose au poids du bras. Ce dernier peut donc être avoir une masse plus élevée, par exemple en étant plus allongé qu'un bras avec gaine déformable ou qu'un bras sans gaine, sans que l'on ait pour autant à prévoir de structure ou de renforcement mécanique pour compenser cette augmentation de masse. La maniabilité et/ou la capacité de charge externe du bras sont donc significativement améliorées.

- De préférence, la gaine enveloppe toutes les articulations, éventuellement à l'exception des articulations des d'extrémité du bras articulé.
- Avantageusement, le volume de la gaine reste constant ou ne varie pas de plus de 10% ou de préférence ne varie pas de plus de 5% lorsqu'elle est soumise à une pression inférieure ou égale à 10 bars et de préférence inférieure ou égale à 5 bars.
- De préférence, la gaine est un tube onduleux, également désigné tube à soufflets.
- De préférence, la gaine est en réalisée en un matériau pris parmi les nuances d'acier inoxydable, le titane, le carbone, le cuivre, les polymères dont le silicone ou une combinaison de ces matériaux.
- Selon un mode de réalisation avantageux, les premier et deuxième supports sont conformés pour maintenir la gaine à distance de l'au moins un actionneur linéaire.
- Selon un mode de réalisation avantageux, le bras comprend une structure de soutien configurée pour maintenir la gaine à distance de l'au moins un actionneur linéaire. Selon un autre mode de réalisation avantageux, la gaine est maintenue à distance de l'au moins un actionneur linéaire par la pression régnant à l'intérieur de la gaine. Le bras articulé comprend un gaz enfermé à l'intérieur de la gaine. Ainsi le bras articulé comprend un gaz enfermé à l'intérieur de la gaine.

- Selon un mode de réalisation avantageux, le bras est configuré pour maintenir la gaine à distance des actionneurs linéaires et des supports, c'est-à-dire également des articulations.
- Selon un mode de réalisation avantageux, la gaine comprend, en plus des articulations, un fluide. De préférence, le fluide est plus léger que le fluide dans lequel le bras est destiné à évoluer. Par exemple, le fluide à l'intérieur de la gaine est un gaz, tel que l'air et le bras est immergé dans un liquide, tel que l'eau ou le sodium. Le gaz est enfermé dans la gaine. Il ne peut donc pas s'en échapper.
- De préférence, la gaine est monolithique. Alternativement, la gaine comprend une enveloppe étanche soutenue par une structure de soutien.
- Selon un mode de réalisation, chaque structure de reprise d'effort comporte un tube creux portant une rotule creuse. Chaque connecteur est creux en son centre et chaque système hexapode est configuré de manière à ménager un canal de passage. Le robot comprend également au moins un câble ou au moins un conduit traversant l'ensemble des systèmes hexapodes en passant au travers de leur canal de passage.

Dans le cadre de la présente invention, il a été envisagé de recourir à au moins un système hexapode, également désigné hexapode, pour former une articulation de robot.

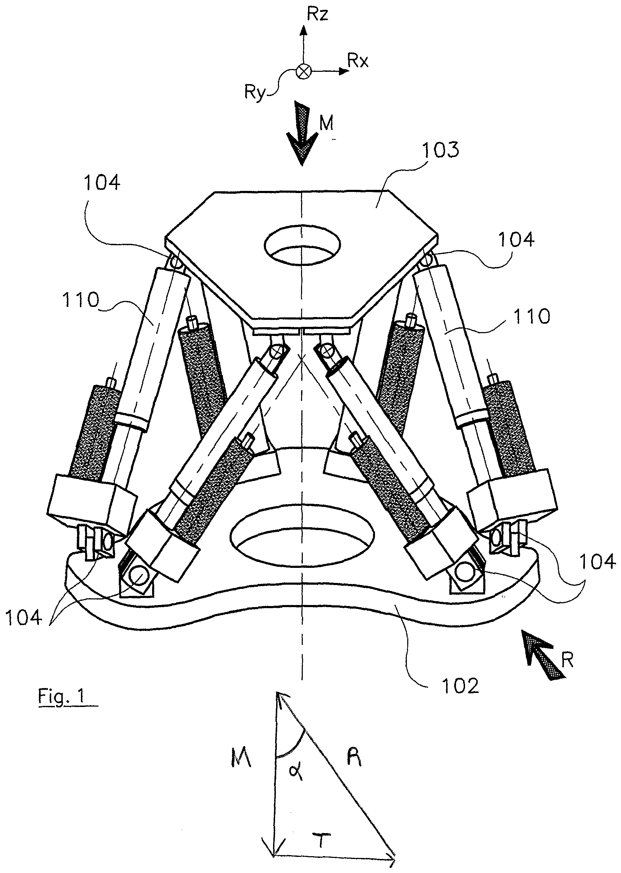

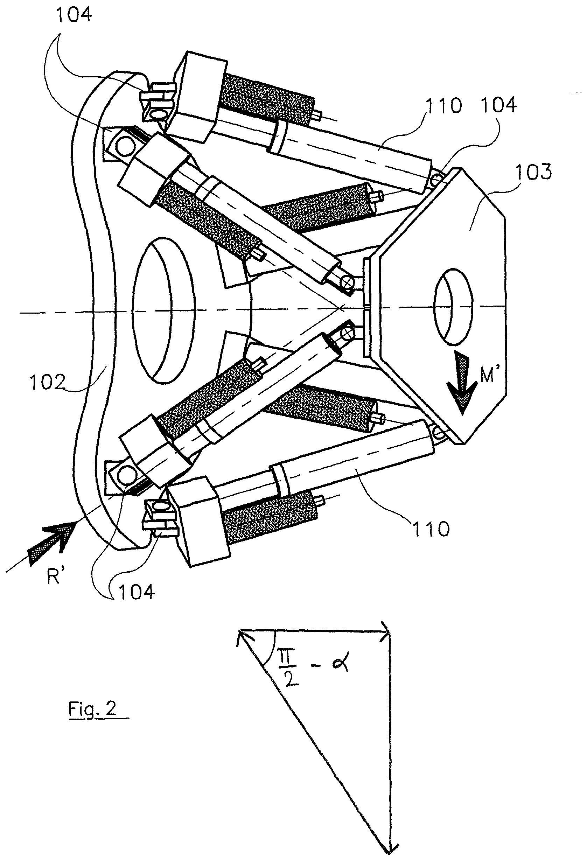

Un système hexapode connu est illustré en figures 1 et 2. Ses caractéristiques ainsi que ses inconvénients, tels qu'ils ont été observés dans le cadre du développement de la présente invention, vont maintenant être décrits. Comme illustré sur ces figures, un système hexapode est un dispositif mécatronique présentant une platine inférieure 102 et une platine supérieure 103, parallèles et mutuellement liées par trois paires de bras 110 rétractables. Chaque bras est articulé par rapport à chacune des deux platines par une liaison rotule 104. Le déploiement ou la rétractation des bras 110 permet de déplacer la platine supérieure 103 par rapport à la platine inférieure 102 selon six degrés de liberté, i.e., trois degrés en translation et trois degrés en rotation.

Les hexapodes sont très efficaces lorsqu'il s'agit de mouvoir des masses supportées sur la platine supérieure 103 et pour lesquelles le poids s'exerce perpendiculairement aux platines. Le poids d'une masse ou une force appliquée perpendiculaire la platine supérieure 103 est représenté par le vecteur noté M sur le bilan des forces de la figure 1. En réaction à cette force extérieure, chaque vérin déploie une force de réaction selon l'axe de travail du vérin. Cette force de réaction déployée par un actionneur est illustrée par le vecteur noté R sur la figure 1. Par souci de clarté, seule une force de réaction est illustrée sur le schéma de la figure 1. Dans la réalité, la force illustrée par le vecteur est répartie sur les six vérins.

L'angle α entre le vecteur M et le vecteur R est faible. L'amplitude de la force déployée par le vérin est R = M / cos(α), (en considérant, par souci de clarté, qu'un seul des vérins encaisse la charge).

Dans le cas où un hexapode est soumis à un effort transversal, c'est-à-dire sensiblement parallèle à la platine supérieure, alors la composante projetée de cet effort transversal est exercée de façon pénalisante sur chaque vérin 110.

Cela est illustré par la figure 2, sur laquelle la force extérieure appliquée à la deuxième platine est notée M'. Les forces M et M', illustrées sur les figures 1 et 2, ont la même intensité, seule leur direction est différente. L'angle a' entre la force de réaction R' du vérin et le vecteur M' est plus grand que l'angle α entre la force de réaction R du vérin et le vecteur M. L'effort tranchant T' est alors très supérieure à l'effort tranchant T. On a :

$$\alpha' = \Pi/2 - \alpha$$

$$R' = M / \cos(\alpha') = M / \cos(\Pi/2 - \alpha);$$

$$R = M / \cos(\alpha) ;$$

$$\cos(\Pi/2 - \alpha) > \cos(\alpha)$$

L'intensité de la force R' doit donc être très supérieure à l'intensité de la force R pour des forces M et M' de même intensité.

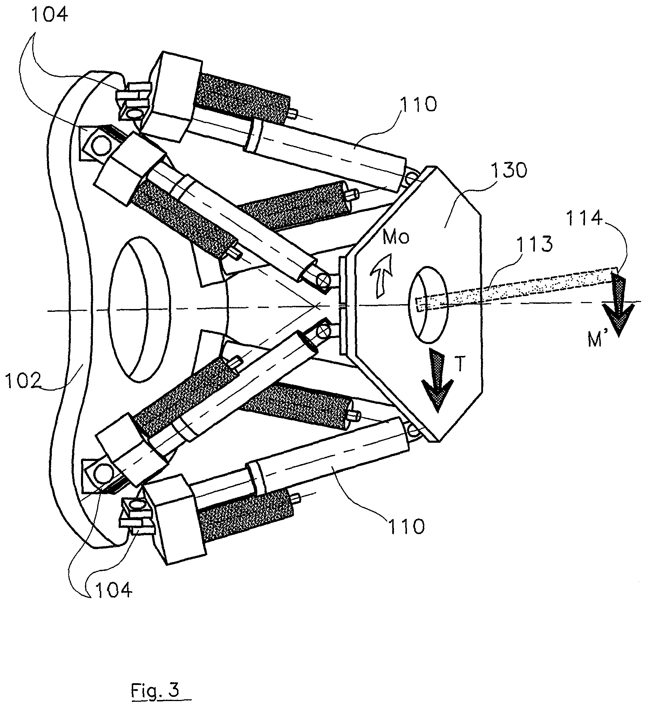

Cette problématique est encore plus importante lorsque la force M' ne s'exerce pas dans le plan de la platine supérieure 103, comme illustré en figure 2, mais lorsqu'elle est déportée de cette dernière. En effet, le bras de levier 113 entre le point 114 d'application de la force M' déportée et la platine supérieure 103 génère un effort tranchant T considérable ainsi qu'un moment Mo. Cela est illustré en figure 3.

Une partie de la force générée par les bras 110 sert donc uniquement à compenser l'effort tranchant T'.

Ainsi, un hexapode dimensionné pour reprendre la charge M est souvent incapable de reprendre la charge M'. Au meilleur des cas, l'effort généré par les vérins pour compenser l'effort tranchant T', diminue très significativement l'effort que les vérins peuvent générer pour déplacer la platine supérieure 103 selon des rotations Rx et Ry d'axes parallèles à la première platine 102. Des axes de rotation Rx et Ry sont illustrés sur la figure 1, l'axe de rotation Rz étant l'axe de rotation propre de la platine 103.

Une solution consisterait à surdimensionner l'hexapode pour qu'il puisse encaisser des charges s'exerçant perpendiculairement et parallèlement aux platines. Cette solution présenterait cependant pour inconvénient de rendre l'hexapode plus coûteux, plus encombrant et surtout plus lourd. Or, une augmentation de l'encombrement et/ou du poids de l'hexapode va à l'encontre d'une amélioration de la maniabilité d'un robot équipé de l'hexapode et de son accessibilité à des zones difficiles d'accès. Par ailleurs, le poids de l'hexapode génère également un effort tranchant et un moment qu'il convient de compenser.

De plus, s'il s'agit de déplacer la platine supérieure uniquement selon les rotations Rx et Ry parallèles à la platine inférieure 102, un surdimensionnement des vérins n'est pas utile puisque ce surdimensionnement a pour objectif de compenser l'effort tranchant qui ne développe aucun travail.

Pour remédier à cela, la présente invention propose de modifier les systèmes hexapodes connus en intégrant une structure mécanique conformée pour reprendre l'effort tranchant T de manière à décharger les actionneurs linéaires de cet effort tranchant.

Les actionneurs linéaires de bras peuvent alors gérer des mouvements de rotation de la charge M' avec toute leur capacité. Cette structure de reprise de l'effort tranchant est logée de préférence au centre de l'hexapode. Elle est solidaire du support fixe et en liaison rotule avec le support à déplacer par rapport au support mobile. Cette articulation forme une rotule offrant deux degrés de liberté en rotation selon les axes souhaités, c'est-à-dire selon les axes Rx et Ry.

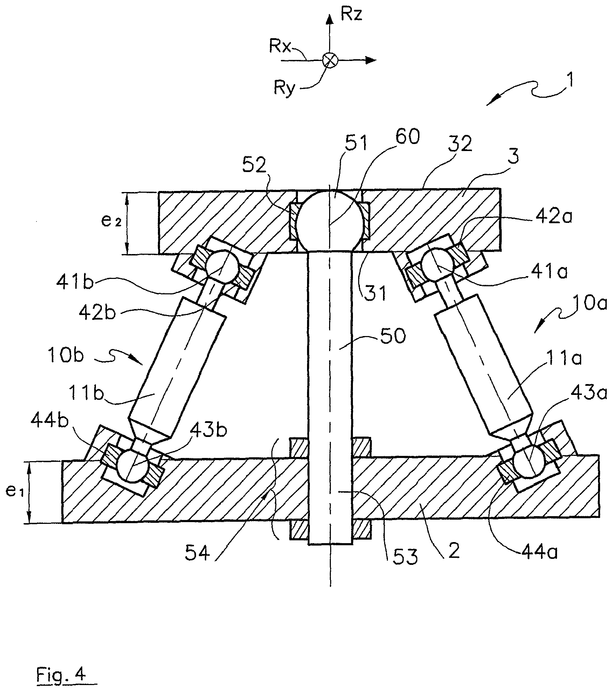

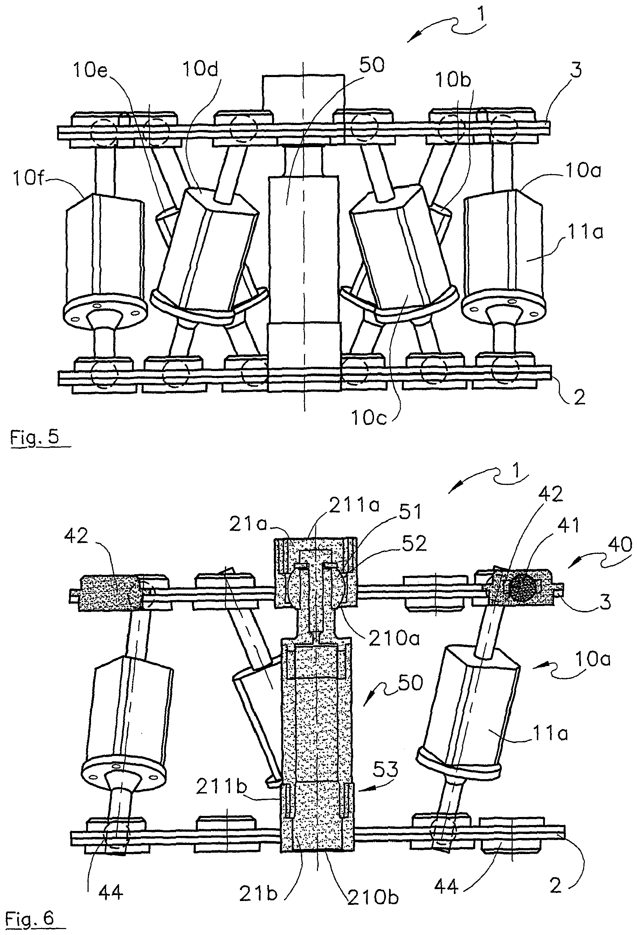

Des exemples de réalisation de l'invention vont maintenant être décrits plus en détail respectivement en référence à la figure 3 et aux figures 4 et 5.

En figure 3, on a illustré un premier mode de réalisation de système hexapode selon l'invention. Ce système hexapode, également désigné hexapode, comprend un premier support 2 et un deuxième support 3. L'invention ne se limite à aucune forme particulière de support. Ainsi, de manière non limitative, chaque support peut présenter une forme planaire et constituer une platine.

De manière non limitative également, on considérera dans cette description que le deuxième support 3 doit être déplacé en rotation par rapport au premier support 2. Pour cela, six actionneurs linéaires 10a, 10b,...10f sont chacun articulés par l'une de leurs extrémités au premier support 2 par une liaison rotule 43a, 44a,...43f, 44f et articulés par une autre de leurs extrémités au deuxième support 3 par une autre liaison rotule 41a, 42a,...41f, 42f. Chaque liaison rotule 41a,...41f, 43a,...43f coopère avec un siège 42a... 42f, 44a,... 44f porté par un des deux supports 2, 3.

Ces actionneurs linéaires 10a,...,10f, également désignés bras d'articulation, comprennent par exemple des vérins hydrauliques, pneumatiques ou à vis par exemple. Ces actionneurs linéaires 10a,...10f sont disposés par paire de manière par exemple à ce que la liaison rotule de l'actionneur 10b soit disposée sur le premier support 2 plus proche de l'actionneur 10a que des autres actionneurs 10c....10f et de manière à ce que cet actionneur 10b soit disposé sur le deuxième support 3 plus proche de l'actionneur 10c que des autres actionneurs linéaires 10d,... 10a. Ainsi, cette disposition des actionneurs permet d'éviter les points de rebroussement ou de blocage du mécanisme.

Le système comporte également une structure de reprise d'effort 50. Cette structure est encastrée dans le premier support 2. Elle est couplée au deuxième support 3 par une liaison rotule 51, 52. Cette structure de reprise d'effort est rigide, c'est-à-dire qu'elle est conformée pour transmettre des efforts (suivant Rx, Ry et Rz) entre l'encastrement 54 et la liaison rotule 51, 52. De préférence, elle ne comprend pas d'articulation autre que la liaison rotule 51, 52.

Selon un mode de réalisation avantageux illustré, cette structure forme un bras de liaison. Une extrémité 53 du bras de liaison coopère avec le premier support 2 pour former l'encastrement 54. L'autre extrémité du bras de liaison forme une rotule 51 qui coopère avec un siège 52 solidaire du deuxième support 3 pour former une liaison rotule 51, 52. Avantageusement, le bras de liaison forme un tube.

Le deuxième support 3 présente au moins deux degrés de liberté en rotation autour des axes Rx et Ry illustrés sur la figure 3, l'axe de rotation Rz étant l'axe de rotation propre du deuxième support 3. Dans le cas où la structure de reprise d'effort est sensiblement linéaire, cylindrique ou conique l'axe Rz est parallèle à la direction principale selon laquelle s'étend cette structure.

Dans un mode de réalisation particulier, le deuxième support 3 peut également tourner par rapport au premier support 2 selon l'axe Rz perpendiculaire aux axes Rx et Ry. Cette liberté en rotation selon l'axe Rz peut par exemple servir à visser un élément grâce à un outil porté par le support.

De manière particulièrement avantageuse, le centre 60 de la liaison rotule 51, 52 est situé dans l'épaisseur $e_2$ du deuxième support 3. Cette épaisseur est illustrée en figure 4. Par exemple dans le cas d'un deuxième support 3 formant une platine présentant une face inférieure 31 et une face supérieure 32, le centre 60 est situé entre ces deux faces 31, 32. De manière plus générale, le pourtour du deuxième support 3 définit une enveloppe et le centre de rotation 60 s'inscrit à l'intérieur de cette enveloppe. Autrement, dit le centre 60 de rotation de la liaison rotule 51, 52 est situé entre deux plans parallèles entre eux, parallèles au plan défini par les axes Rx et Ry, et passant par le deuxième support 3.

De manière particulièrement avantageuse, les centres des rotules 41a,...41f, 43a...43f, sont situés respectivement dans l'épaisseur $e_2$ de la platine 3 et $e_1$ de la platine 2. Les centres des rotules 41a...41f sont coplanaires et le centre 60 appartient au plan contenant les centres des rotules 41a...41f. Cela participe à réduire les efforts s'exerçant que les actionneurs 11a...11f autres que ceux nécessaires à réaliser la mise en mouvement de la platine 3. Les centres 43a...43f sont également coplanaires.

Ainsi, l'invention supprime ou tout au moins réduit le bras de levier entre le centre de rotation 60, le deuxième support 3 et les centres des rotules 41a...41f, limitant de ce fait les efforts tranchants devant être équilibrés par les actionneurs 11a...11f au détriment des efforts nécessaires pour mettre en mouvement le deuxième support 3. La structure de reprise d'effort 50 permet notamment de reprendre l'effort tranchant qu'exercerait une force extérieure orientée non perpendiculairement au premier support 2 et s'exerçant sur le support 3. C'est-à-dire une force orientée non perpendiculairement au plan défini par les axes Rx et Ry.

L'encombrement et le poids du système peuvent alors être réduits tout en conservant sa capacité de charge en rotation selon les axes Rx et Ry.

De manière préférée, les liaisons rotules 41, 42 des actionneurs linéaires 10 avec le deuxième support 3 forment un contour plan. Le centre 60 de la liaison rotule 51, 52 de la structure de reprise d'effort 50 tranchant est situé de manière à ce qu'une droite perpendiculaire audit plan et passant par le centre 60 passe également à l'intérieur dudit contour. De préférence, les centres des rotules 41, 42 définissent un cercle et le centre 60 est situé au milieu du cercle ou sur une droite perpendiculaire au cercle et passant par le centre du cercle. Ainsi, les efforts du deuxième support 3 sont répartis de façon homogène sur la structure de reprise d'effort 50.

De préférence, il en est de même pour la liaison encastrée 54. Elle est de préférence située à l'intérieur d'un pourtour défini par le centre des liaisons rotule 43, 44. De préférence, ce pourtour forme un cercle et l'encastrement 54 est situé au milieu de ce cercle ou sur une droite perpendiculaire à ce cercle et passant par son centre.

Le mode de réalisation illustré aux figures 5 et 6 reprend les caractéristiques du mode de réalisation décrit ci-dessus en référence à la figure 4. En outre, dans ce mode de réalisation, le centre de rotation 41 des rotules articulant les actionneurs linéaires 10 sur le deuxième support 3 est rapproché de ce deuxième support 3. De préférence, le centre de rotation 41 est situé dans le plan ou dans l'épaisseur $e_2$ du deuxième support 3. Cela permet de réduire encore plus le bras de levier entre la rotule et le deuxième support 3 réduisant de ce fait les efforts appliqués sur ce support 3 et sur les actionneurs linéaires 10. L'encastrement et le poids du système peuvent alors être réduits tout en préservant la capacité d'entraînement en rotation selon les axes Rx et Ry. Alternativement, cela permet d'augmenter la capacité de charge du système pour un poids et un encombrement équivalents. On notera que cette caractéristique peut être appliquée indépendamment de la présence d'une structure de reprise des efforts tranchants.

De même, et de manière préférée, le centre de rotation 43 des rotules articulant les actionneurs linéaires 10 sur le premier support 2 est rapproché de ce premier support 2. De préférence, le centre de rotation 43 est situé dans le plan ou dans l'épaisseur $e_1$ du premier support 3. On notera que cette caractéristique peut également être appliquée indépendamment de la présence d'une structure de reprise des efforts tranchants.

De préférence, chaque support 2, 3 est une plaque en métal dont l'épaisseur est relativement faible par rapport à la hauteur du système, la hauteur du système étant prise selon la direction Rz. Ces plaques de métal peuvent être dotées de renforts augmentant leur rigidité suivant les axes Rx et Ry pour limiter leur déformation sous l'action des efforts générés par les actionneurs, la structure de reprise d'effort et les efforts extérieurs.

De préférence, les premier et deuxième supports 2, 3 sont des plaques sur lesquelles sont rapportés les sièges 42, 44 des liaisons rotule pour articuler les actionneurs linéaires 10. La fabrication du système en est ainsi facilitée.

De préférence, le deuxième support 3 comporte un connecteur 21a. Ce connecteur 21a comporte le siège 52 de la liaison rotule 51, 52 articulant la structure de reprise d'effort 50 sur le deuxième support 3. De préférence, ce connecteur 21a est également conformé pour accueillir l'extrémité d'une autre structure de reprise d'effort 50 pour former avec cette dernière un encastrement. Ainsi, un même connecteur peut servir pour former une liaison rotule et pour former un encastrement. Ainsi, les premier et deuxième supports 2, 3 peuvent être similaires ce qui facilite leur fabrication et leur coût.

De manière avantageuse, le premier support 2 comporte également un connecteur 21b. Ainsi, avant assemblage du système, les premier et deuxième supports 2, 3 sont identiques.

Selon un mode de réalisation particulier, les connecteurs 21a, 21b se présentent sous la forme d'un manchon présentant deux extrémités. Une première extrémité 210a, 210b est configurée pour accueillir le siège 52 et la rotule 51 permettant de former la liaison rotule 51, 52 de la structure de reprise d'effort 50 tranchant. Une deuxième extrémité 211a, 211b est configurée pour accueillir l'extrémité 53 de la structure 50 de manière à former avec cette dernière un encastrement. Typiquement, cette liaison encastrement 54 est obtenue par vissage de la structure de reprise d'effort 50 tranchant dans le connecteur 21a, 21b. Une goupille peut par exemple être prévue pour supprimer le degré de liberté en rotation restant.

De manière avantageuse, un même connecteur est configuré pour recevoir simultanément une première structure 50 pour former une liaison rotule et une deuxième structure 50 pour former une liaison-encastrement. Ce mode de réalisation est particulièrement avantageux si plusieurs systèmes hexapodes sont montés en série.

Ainsi, un même connecteur et un même support peuvent être utilisés pour deux hexapodes montés en série. En prenant l'exemple de la figure 6, le connecteur 21a du deuxième support 3 peut par exemple accueillir par son extrémité 211a une structure 50 additionnelle non représentée, de manière à former avec cette dernière un encastrement. En montant également des actionneurs linéaires additionnels au-dessus du deuxième support 3 et en couplant ces actionneurs linéaires additionnels à un troisième support non représenté, on obtiendrait ainsi deux systèmes hexapodes montés en série et ayant en commun le deuxième support 3. Ce mode de réalisation est privilégié.

Néanmoins, on notera que l'invention couvre également les hexapodes montés en série mais ne présentant pas de connecteur apte à recevoir de structure de reprise d'effort 50. On notera également que l'invention couvre les hexapodes montés en série mais ne partageant pas un support commun.

Selon un mode de réalisation préféré, on prévoit un dispositif de pilotage des actionneurs linéaires configuré pour empêcher une rotation du deuxième support 3 par rapport au premier support 2 autour de l'axe Rz.

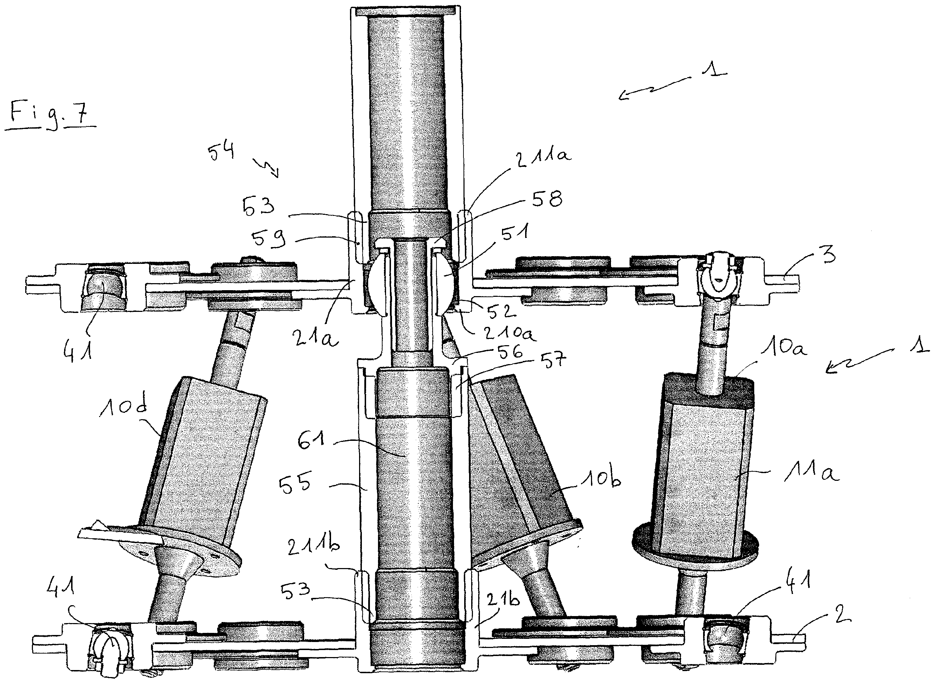

La Figure 7 illustre un mode de réalisation optionnel mais particulièrement avantageux. Dans ce mode de réalisation, la structure de reprise d'effort 50 est entièrement creuse. Chaque système hexapode 1 présente ainsi un canal de passage 61. Cela permet d'alléger l'ensemble de de l'articulation 1 et donc d'alléger le bras poly-articulé ou d'autoriser une capacité de charge accrue pour un poids équivalent. Cela permet également de faire passer des câbles ou des conduits au centre de la liaison. Une rotation de l'articulation autour de l'axe Rz, c'est-à-dire autour de l'axe selon lequel s'étend principalement la structure de reprise d'effort, n'entraine ainsi pas de vrillage des câbles ou conduits traversant cette dernière, et cela même si ces câbles ou conduits s'étendent d'une extrémité à l'autre du bras poly-articulé. Par ailleurs, le positionnement des câbles au centre de l'articulation évite l'élongation de ceux-ci lors des mouvements de l'articulation. Ces câbles sont par exemple des câbles électriques, permettant par exemple de piloter des outils disposés sur le bras ou permettant de communiquer avec des capteurs supportés par le bras. Des conduits peuvent permettre de piloter et d'actionner des outils, par exemple pneumatiques ou hydrauliques disposés sur le bras. Ces conduits peuvent également permettre d'injecter, de prélever ou d'extraire un fluide depuis l'extrémité du bras.

Selon le mode de réalisation non limitatif illustré en figure 7, la structure de reprise d'effort 50 est sensiblement similaire à celle décrite en référence aux figures 5 et 6.

Le connecteur 21a est creux. Il comporte un alésage interne, traversant.

La deuxième extrémité 211a du connecteur comporte un filetage interne 59 coopérant avec un filetage externe situé sur la face externe d'une première extrémité 53 du tube creux 55 de la structure de reprise d'effort.

La première extrémité 210a du connecteur comporte une réduction de section qui empêche la rotule 51 de sortir de l'alésage formé par le connecteur.

Le tube creux 55 comprend une deuxième extrémité portant sur sa face interne un filetage 57 conformé pour coopérer avec un filetage complémentaire porté par une face externe d'une pièce formant support 56 de rotule pour la rotule 51. Ce support 56 de rotule se fixe ainsi sur le tube creux 55 par vissage. Ce mode de réalisation permet de simplifier considérablement la fabrication et le montage des articulations.

Le support 56 de rotule comprend une portion de réception de la rotule 51. La rotule 51 forme principalement une sphère qui comprend un alésage complémentaire de cette portion de réception et s'enfile sur cette dernière depuis l'extrémité du support 56 de rotule. Une butée de rétention est également prévue pour empêcher le retrait de la rotule 51. Cette butée comprend de préférence une vis présentant un filetage externe qui coopère avec un filetage interne porté par l'alésage du support 56 de rotule 51. Ainsi la vis se fixe sur l'extrémité du support 56 de rotule 51. La tête de vis présente une section supérieure à l'alésage de la rotule 51. Cette dernière bute ainsi contre la face inférieure de la tête de vis. De préférence, une rondelle est prévue entre la tête de vis 58 et la rotule 51.

De manière particulièrement avantageuse, la vis est creuse. La structure de reprise d'effort 50 comprenant les deux connecteurs 21a, 21b, le tube creux 55, le support 56 de rotule 51, la rotule 51 et la vis 58 présente donc une ouverture traversante formant un canal de passage 61 d'un câble ou d'un conduit.

Avantageusement, le montage d'une articulation 1 s'effectue de la manière suivante :

- fixation, par vissage de préférence, du tube creux 55 sur le connecteur 21b solidaire du support 2;
- fixation, par vissage de préférence, du support 56 de rotule 51 sur le tube creux 55;
- passage du support 56 de rotule 51 au travers du connecteur 21a solidaire du support 3;
- positionnement de la rotule 51 sur la portion de réception portée par le support 56 de rotule et à l'intérieur du siège 52 formé par le connecteur 21a ;
- fixation, par vissage de préférence, de la butée de rétention, ici la vis creuse 58 et la rondelle sur le support 56 de rotule 51.

L'assemblage du bras peut ensuite se poursuivre par l'assemblage d'une deuxième articulation. Pour cela, on réitère les étapes ci-dessus à partir du connecteur 21a du support 3. La première étape consiste ainsi à fixer un autre tube creux sur le connecteur 21a.

D'autres modes de réalisation sont envisageables pour ménager un canal traversant chacune des articulations.

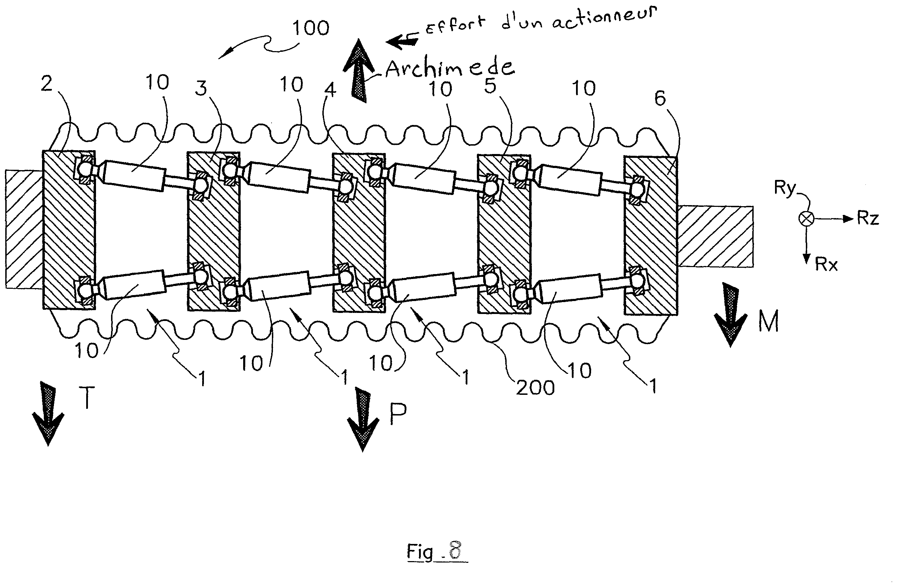

De manière particulièrement avantageuse, et comme illustré en figure 8, le bras poly-articulé 100 formé de plusieurs systèmes hexapodes comprend une gaine 200 qui forme un manchon autour du bras poly-articulé ou tout au moins autour des systèmes hexapodes.

Cette gaine est étanche. Elle est déformable et peut suivre les mouvements des articulations. En cas de rotation autour d'un axe Rx ou Ry, la gaine 200 épouse la forme du bras poly-articulé 100. On remarquera que quelle que soit la courbure du bras 100, les centres des rayons de courbure des articulations se trouvent en dehors de cette dernière et le plus souvent en dehors de l'intérieur de la gaine 200. La déformation de la gaine est donc répartie sur une surface relativement grande de cette dernière. Les zones sollicitées en déformation sont donc étendues, ce qui réduit la fatigue de la gaine 200. Son étanchéité est donc efficace et durable.

La gaine 200 est donc bien adaptée pour faire évoluer le bras 100 dans un environnement dont les articulations doivent être protégées. Tel est le cas d'un réacteur à caloporteur sodium par exemple.

De préférence, la gaine 200 est fixée de manière étanche à l'une de ses extrémités au bâti ou au support 2 solidaire du bâti c'est-à-dire au support de l'extrémité proximale du bras 100. Elle est de préférence fixée à l'autre de ses extrémités au support 6 de l'extrémité distale du bras 100 ou à un élément solidaire de ce support 6.

De préférence, la gaine 200 présente une étanchéité continue entre ses deux extrémités. Elle peut être monolithique ou formée de plusieurs parties assemblées entre elles de manière étanche.

De manière préférée, la gaine 200 présente un volume constant ou est faiblement compressible. Ainsi, elle est déformable mais non ou peu compressible sous l'effet d'une pression extérieure. Soumise à une pression environnante relativement forte, typiquement comprise entre 1 et 10 Bars, la gaine 200 conserve un volume sensiblement constant. De manière plus générale, soumise à une pression environnante relativement forte, typiquement comprise entre 1 et 10 Bars, le volume de la gaine 200 ne décroit pas de plus de 10% et de préférence ne décroit pas de plus de 5%. Une telle pression extérieure peut par exemple être générée par un fluide dans lequel le bras poly-articulé 100 est immergé. C'est ce qui peut se passer lorsque le bras 100 réalise une mission d'ISIR dans un réacteur à caloporteur sodium.

La gaine 200 a un volume constant qui permet d'éviter qu'elle ne rentre au contact des actionneurs linéaires 10 sous l'effet d'une pression externe. Les risques de déchirure sont alors évités. Par ailleurs, la gaine 200 accroît le volume du bras poly-articulé 100 et augmente donc la poussée d'Archimède s'exerçant sur ce dernier. La poussée d'Archimède est illustrée sur la figure 8. Cette poussée d'Archimède compense tout ou partie du poids du bras poly-articulé 100. En effet, le poids propre du bras 100 a tendance à s'ajouter à la charge de la masse M porté par l'extrémité distale du bras et/ou par l'effort exercé par cette extrémité sur un élément extérieur. L'effort tranchant induit par le poids propre du bras 100 limite donc la capacité de charge de ce dernier. Grâce à l'invention, la capacité de charge que peut déployer le bras 100 est ainsi augmentée en compensant tout ou partie du poids propre du bras par la poussée d'Archimède.

Cela est particulièrement avantageux lorsque le bras 100 présente une masse élevée du fait de sa longueur, du nombre d'articulations qu'il comprend ou de la dimension de ces dernières.

Cela est particulièrement avantageux quand le bras est déployé à l'horizontale et / ou travaille dans une position déployée proche de l'horizontale.

Le fluide présent à l'intérieur de la gaine 200 est plus léger que celui du milieu environnant le bras 100. Typiquement, on privilégiera du gaz, par exemple de l'air, lorsque le bras poly-articulé 100 évolue dans un liquide. On pourra également prévoir un gaz plus léger que l'air, tel que l'hélium, lorsque le bras 100 évolue à l'air libre. Cela est d'autant plus avantageux que le poids du bras 100 induit un effort tranchant sur la structure de reprise d'effort 50 lorsqu'il n'est pas à la verticale. Ce poids et l'effort tranchant qu'il induit sont illustrés en figure 8.

De préférence, la gaine 200 est formée par un tube onduleux tel qu'un tube à soufflet. Avantageusement, elle est formée par un tube ondulé en métal, par exemple en inox. Le choix d'un tel matériau permet de résister à la pression du fluide environnant, voire à la contrainte de température et/ou chimique lorsqu'il s'agit par exemple d'un caloporteur sodium. La rigidité du tube onduleux permet à la gaine 200 de conserver un volume lui permettant de suivre les mouvements imprimés par le bras poly-articulé même en présence d'une pression extérieure.

Selon un autre mode de réalisation, la gaine 200 comprend une enveloppe externe souple et étanche ainsi qu'une ossature rigide sur laquelle s'appuie l'enveloppe souple. L'ossature forme ainsi une structure de soutien. Elle est par exemple en métal. Elle peut être rapportée sur le bras poly-articulé 100.

Selon un autre mode de réalisation, l'ossature est formée par les supports 2,...6 des articulations 1. Ces dernières sont donc dimensionnées pour maintenir l'enveloppe à distance les actionneurs linéaires 10 et des rotules de couplage des actionneurs linéaires aux supports.

Selon encore un autre mode de réalisation, on prévoit une gaine qui soit en partie déformable mais qui empêche une déformation qui entraînerait un contact entre la gaine et les actionneurs 10. Ainsi, on pourrait avoir une gaine formée par une enveloppe externe souple qui puisse se déformer jusqu'à rencontrer une ossature rigide l'empêchant de rentrer en contact avec les actionneurs linéaires 10. Ainsi, les risques de déchirure de la gaine au contact des actionneurs linéaires 10 sont supprimés.

Selon encore un autre mode de réalisation, le bras est configuré pour maintenir à l'intérieur de la gaine 200 une pression suffisante pour maintenir le volume de cette dernière. Ainsi, on peut prévoir d'injecter dans la gaine un gaz sous pression, de manière à ce que la pression à l'intérieur de la gaine 200 équilibre l'action de la pression environnante sur la gaine.

Il apparaît ainsi clairement que l'invention offre une solution robuste pour reprendre simplement l'effort tranchant afin de décharger les actionneurs. L'invention propose aussi une solution efficace de type rotule mécanisée pour mettre en mouvement une charge ou pour exercer une action selon au moins deux degrés de liberté en rotation.

L'invention s'avère ainsi particulièrement efficace comme élément de base d'un robot ou d'un mécanisme articulé utilisé dans les missions d'inspection ou de réparation en milieu contraignant tel que dans des réacteurs nucléaires.

L'invention n'est pas limitée aux modes de réalisations précédemment décrits et s'étend à tous les modes de réalisation couverts par les revendications.

En particulier, bien qu'elle soit particulièrement avantageuse pour des missions d'inspection et de réparation en milieu nucléaire, l'invention s'applique également aux articulations pour des robots ayant d'autres missions ou étant destinés à évoluer dans d'autres environnements.

## Revendications

1. Système hexapode (1) comprenant un premier (2) et un deuxième (3) support et six actionneurs linéaires (10a, 10b, 10c, 10d, 10e, 10f), chaque actionneur linéaire présentant deux extrémités articulées respectivement au premier (2) et au deuxième (3) support par une liaison rotule (41, 42, 43, 44), comprenant une structure de reprise d'effort (50) d'une part encastrée sur le premier support (2) et d'autre part couplée au deuxième support (3) par une liaison rotule (51, 52), au moins l'un parmi le premier (2) et le deuxième (3) support comportant un connecteur (21a, 21b) configuré pour coopérer avec ladite structure de reprise d'effort (50) de manière à former ensemble ledit encastrement, respectivement ladite liaison rotule (51, 52), le connecteur (21a, 21b) étant en outre configuré de manière à coopérer avec une deuxième structure de reprise d'effort d'un deuxième système hexapode, les deux systèmes hexapodes étant montés en série, de manière à former avec cette deuxième structure de reprise d'effort une liaison rotule, respectivement un encastrement, le même connecteur coopérant ainsi avec les structures de reprise d'effort de deux systèmes hexapodes montés en série.

2. Système hexapode (1) selon la revendication précédente, dans lequel le connecteur (21a, 21b) forme une pièce monolithique et dans lequel le support commun (2, 3) forme une pièce monolithique.

3. Système hexapode (1) selon l'une quelconque des revendications précédentes, dans lequel les structures de reprise (50) d'effort de deux systèmes hexapodes montés en série sont solidarisées aux supports (2, 3) par les connecteurs (21a, 21b) uniquement.

**4.** Système hexapode (1) selon l'une quelconque des revendications précédentes, dans lequel le support (2, 3) comportant le connecteur (21a, 21b) est commun aux deux systèmes hexapodes montés en série et dans lequel les actionneurs (10a, ...) des deux systèmes hexapodes sont articulés en rotation sur le support commun (2, 3).

**5.** Système hexapode (1) selon l'une quelconque des revendications précédentes, dans lequel la liaison rotule (51, 52) par laquelle la structure de reprise d'effort (50) est couplée au deuxième support (3) présente un centre de rotation (60) qui est situé dans l'épaisseur du deuxième support (3).

**6.** Système hexapode (1) selon l'une quelconque des revendications précédentes, dans lequel les liaisons rotules (43, 44) par lesquelles les actionneurs linéaires (10a.., 10f) sont articulés au premier support (2) présentent chacune un centre de rotation qui est situé dans l'épaisseur du premier support (2) et dans lequel les liaisons rotules (41, 42) par lesquelles les actionneurs linéaires (10a.., 10f) sont articulés au deuxième support (3) présentent un centre de rotation qui est situé dans l'épaisseur du deuxième support (3).

**7.** Système hexapode (1) selon l'une quelconque des deux revendications précédentes, dans lequel ledit centre de rotation (60) est situé entre deux plans passant par le deuxième support (3), lesdits deux plans étant parallèles entre eux et étant perpendiculaires à un axe Rz qui passe d'une part par la liaison encastrement entre la structure de reprise d'effort (50) et le premier support (2) et qui passe d'autre part par le centre de la liaison rotule (51, 52) couplant la structure de reprise d'effort au le deuxième support (3).

**8.** Système hexapode (1) selon l'une quelconque des trois revendications précédentes, dans lequel le deuxième support (3) présente une face interne (31) tournée vers la structure de reprise d'effort (50) et une face externe (32) opposée à la face interne (31) et dans lequel ledit centre de rotation (60) est situé entre les faces interne (31) et externe (32).

**9.** Système hexapode (1) selon l'une quelconque des quatre revendications précédentes, dans lequel ledit centre de rotation (60) de la liaison rotule formée par le deuxième support (3) et la structure de reprise d'effort (50) est situé au centre d'un cercle formé par les liaisons rotules (41, 42) par lesquelles les actionneurs linéaires (10) sont articulés sur le deuxième support (3).

**10.** Système hexapode (1) selon l'une quelconque des revendications précédentes, dans lequel la structure de reprise d'effort (50) est encastrée sur le premier support (2) au centre d'un cercle formé par les liaisons rotules (43, 44) par lesquelles les actionneurs linéaires (10a.., 10f) sont articulés sur le premier support (2).

**11.** Système hexapode (1) selon l'une quelconque des revendications précédentes, dans lequel la structure de reprise d'effort (50) présente une première extrémité au niveau de laquelle la structure de reprise d'effort (50) est encastrée sur le premier support (2) et une deuxième extrémité au niveau de laquelle la structure de reprise d'effort (50) est couplée au deuxième support (3) par une rotule (51, 52) et dans lequel les première et deuxième extrémités de la structure de reprise d'effort (50) sont solidaires.

**12.** Système hexapode (1) selon l'une quelconque des revendications précédentes, comprenant une unique structure de reprise d'effort (50).

**13.** Système hexapode (1) selon l'une quelconque des revendications précédentes, dans lequel la structure de reprise d'effort (50) comporte un tube creux (55) portant une rotule (51) creuse, dans lequel le connecteur (21a, 21b) est creux en son centre, le système étant configuré de manière à ménager un canal de passage (61) traversant la structure de reprise d'effort (50) et les premier et deuxième supports (2, 3)

**14.** Robot d'inspection et/ou de réparation **caractérisé en ce qu'**il comprend un bras poly-articulé équipé d'une pluralité de systèmes hexapodes (1) selon l'une quelconque des revendications précédentes et dans lequel les systèmes hexapodes (1) sont disposés en série.

**15.** Robot selon la revendication précédente, comprenant également au moins un câble ou au moins un conduit traversant l'ensemble des systèmes hexapodes (1) en passant au travers de leur canal de passage (61).

**Patentansprüche**

**1.** Sechsfüßiges System (1), umfassend einen ersten (2) und einen zweiten (3) Träger und sechs lineare Aktoren (10a, 10b, 10c, 10d, 10e, 10f), wobei jeder lineare Aktor zwei Enden aufweist, die jeweils durch eine Kugelgelenkverbindung (41, 42, 43, 44) an den ersten (2) und an den zweiten (3) Träger angelenkt sind, eine Kraftaufnahmestruktur (50) umfassend, die einerseits im ersten Träger (2) eingebettet ist und andererseits durch eine Kugelgelenkverbindung (51, 52) an den zweiten Träger (3) gekoppelt ist, wobei mindestens einer von dem ersten (2) und zweiten (3) Träger einen Steckverbinder (21a, 21b) beinhaltet, der konfiguriert ist, um mit der Kraftaufnahmestruktur (50) zusammenzuwirken, um gemeinsam die Einbettung, beziehungsweise die Kugelgelenkverbindung (51, 52) zu bilden, wobei der Steckverbinder (21a, 21b) weiter derart konfiguriert ist, um mit einer zweiten Kraftaufnahmestruktur eines zweiten sechsfüßigen Systems zusammenzuwirken, wobei die beiden sechsfüßigen Systeme in Reihe montiert sind, um mit dieser zweiten Kraftaufnahmestruktur eine Kugelgelenkverbindung, beziehungsweise eine Einbettung zu bilden, wobei derselbe Steckverbinder somit mit den Kraftaufnahmestrukturen zweier in Reihe montierter sechsfüßiger Systeme zusammenwirkt.

2. Sechsfüßiges System (1) nach dem vorstehenden Anspruch, wobei der Steckverbinder (21a, 21b) ein monolithisches Teil bildet und wobei der gemeinsame Träger (2, 3) ein monolithisches Teil bildet.

3. Sechsfüßiges System (1) nach einem der vorstehenden Ansprüche, wobei die Kraftaufnahmestrukturen (50) zweier in Reihe montierter sechsfüßiger Systeme nur durch die Steckverbinder (21a, 21b) fest mit den Trägern (2, 3) verbunden sind.

4. Sechsfüßiges System (1) nach einem der vorstehenden Ansprüche, wobei der Träger (2, 3), der den Steckverbinder (21a, 21b) beinhaltet, beiden in Reihe montierten sechsfüßigen Systemen gemeinsam ist, und wobei die Aktoren (10a, ...) der beiden sechsfüßigen Systeme drehend an dem gemeinsamen Träger (2, 3) angelenkt sind.

5. Sechsfüßiges System (1) nach einem der vorstehenden Ansprüche, wobei die Kugelgelenkverbindung (51, 52), durch die die Kraftaufnahmestruktur (50) an den zweiten Träger (3) gekoppelt ist, eine Drehmitte (60) aufweist, die sich in der Dicke des zweiten Trägers (3) befindet.

6. Sechsfüßiges System (1) nach einem der vorstehenden Ansprüche, wobei die Kugelgelenkverbindungen (43, 44), durch die die linearen Aktoren (10a, ... 10f) an den ersten Träger (2) angelenkt sind, jeweils eine Drehmitte aufweisen, die sich in der Dicke des ersten Trägers (2) befindet, und wobei die Kugelgelenkverbindungen (41, 42), durch die die linearen Aktoren (10a, ... 10f) an den zweiten Träger (3) angelenkt sind, eine Drehmitte aufweisen, die sich in der Dicke des zweiten Trägers (3) befindet.

7. Sechsfüßiges System (1) nach einem der beiden vorstehenden Ansprüche, wobei sich die Drehmitte (60) zwischen zwei Ebenen befindet, die durch den zweiten Träger (3) verlaufen, wobei die beiden Ebenen parallel zueinander sind, und senkrecht zu einer Achse Rz sind, die einerseits durch die Einbettungsverbindung zwischen der Kraftaufnahmestruktur (50) und dem ersten Träger (2) verläuft, und die andererseits durch die Mitte der Kugelgelenkverbindung (51, 52), die die Kraftaufnahmestruktur an den zweiten Träger (3) koppelt, verläuft.

8. Sechsfüßiges System (1) nach einem der drei vorstehenden Ansprüche, wobei der zweite Träger (3) eine Innenseite (31) aufweist, die zur Kraftaufnahmestruktur (50) gewandt ist, und eine zur Innenseite (31) entgegengesetzte Außenseite (32), und wobei sich die Drehmitte (60) zwischen der Innen- (31) und Außenseite (32) befindet.

9. Sechsfüßiges System (1) nach einem der vier vorstehenden Ansprüche, wobei sich die Drehmitte (60) der Kugelgelenkverbindung, die durch den zweiten Träger (3) und die Kraftaufnahmestruktur (50) gebildet wird, in der Mitte eines Kreises befindet, der durch die Kugelgelenkverbindungen (41, 42) gebildet wird, durch die die linearen Aktoren (10) an dem zweiten Träger (3) angelenkt sind.

10. Sechsfüßiges System (1) nach einem der vorstehenden Ansprüche, wobei die Kraftaufnahmestruktur (50) in dem ersten Träger (2) in der Mitte eines Kreises eingebettet ist, der durch die Kugelgelenkverbindungen (43, 44) gebildet wird, durch die die linearen Aktoren (10a, ... 10f) an den ersten Träger (2) angelenkt sind.

11. Sechsfüßiges System (1) nach einem der vorstehenden Ansprüche, wobei die Kraftaufnahmestruktur (50) ein erstes Ende aufweist, im Bereich dessen die Kraftaufnahmestruktur (50) in dem ersten Träger (2) eingebettet ist, und ein zweites Ende, im Bereich dessen die Kraftaufnahmestruktur (50) durch ein Kugelgelenk (51, 52) an den zweiten Träger (3) gekoppelt ist, und wobei das erste und zweite Ende der Kraftaufnahmestruktur (50) fest miteinander verbunden sind.

12. Sechsfüßiges System (1) nach einem der vorstehenden Ansprüche, eine einzige Kraftaufnahmestruktur (50) umfassend.

13. Sechsfüßiges System (1) nach einem der vorstehenden Ansprüche, wobei die Kraftaufnahmestruktur (50) eine hohle Röhre (55) beinhaltet, die ein hohles Kugelgelenk (51) trägt, wobei der Steckverbinder (21a, 21b) in seiner Mitte hohl ist, wobei das System derart konfiguriert ist, um einen Verlaufskanal (61) vorzusehen, der die Kraftaufnahmestruktur (50) und den ersten und zweiten Träger (2, 3) durchquert.

**14.** Inspektions- und/ oder Reparaturroboter, **dadurch gekennzeichnet, dass** er einen mehrgelenkigen Arm umfasst, der mit einer Vielzahl von sechsfüßigen Systemen (1) nach einem der vorstehenden Ansprüche ausgerüstet ist, und wobei die sechsfüßigen Systeme (1) in Reihe angeordnet sind.

**15.** Roboter nach dem vorstehenden Anspruch, auch mindestens ein Kabel oder mindestens eine Rohrleitung umfassend, das / die alle sechsfüßigen Systeme (1) durchquert, indem es/ sie durch deren Verlaufskanal (61) hindurch verläuft.

**Claims**

**1.** A hexapod system (1) comprising a first (2) and a second (3) support and six linear actuators (10a, 10b, 10c, 10d, 10e, 10f), each linear actuator having two ends articulated respectively to the first (2) and to the second (3) support by a ball joint connection (41, 42, 43, 44), comprising a force-absorbing structure (50) on the one hand embedded on the first support (2) and on the other hand coupled to the second support (3) by a ball joint connection (51, 52), at least one of the first (2) and the second (3) support including a connector (21a, 21b) configured to cooperate with said force-absorbing structure (50) so as to form together said embedding, respectively said ball joint connection (51, 52), the connector (21a, 21b) being further configured so as to cooperate with a second force-absorbing structure of a second hexapod system, the two hexapod systems being mounted in series, so as to form with this second force-absorbing structure a ball joint connection, respectively an embedding, the same connector thus cooperating with the force-absorbing structures of two hexapod systems mounted in series.

**2.** The hexapod system (1) according to the preceding claim, wherein the connector (21a, 21b) forms a monolithic part and wherein the common support (2, 3) forms a monolithic part.

**3.** The hexapod system (1) according to any one of the preceding claims, wherein the force-absorbing structures (50) of two hexapod systems mounted in series are integral with the supports (2, 3) by the connectors (21a, 21b) only.

**4.** The hexapod system (1) according to any one of the preceding claims, wherein the support (2, 3) including the connector (21a, 21b) is common to the two hexapod systems mounted in series and wherein the actuators (10a, ...) of the two hexapod systems are articulated in rotation on the common support (2, 3).

**5.** The hexapod system (1) according to any one of the preceding claims, wherein the ball joint connection (51, 52) by which the force-absorbing structure (50) is coupled to the second support (3) has a centre of rotation (60) which is located in the thickness of the second support (3).

**6.** The hexapod system (1) according to any one of the preceding claims, wherein the ball joint connections (43, 44) by which the linear actuators (10a .., 10f) are articulated to the first support (2) each have a centre of rotation which is located in the thickness of the first support (2) and wherein the ball joint connections (41, 42) by which the linear actuators (10a .., 10f) are articulated to the second support (3) have a centre of rotation which is located in the thickness of the second support (3).

**7.** The hexapod system (1) according to any one of the two preceding claims, wherein said centre of rotation (60) is located between two planes passing through the second support (3), said two planes being mutually parallel and being perpendicular to an axis Rz which passes on the one hand through the embedding connection between the force-absorbing structure (50) and the first support (2) and which on the other hand passes through the centre of the ball joint connection (51, 52) coupling the force-absorbing structure to the second support (3).

**8.** The hexapod system (1) according to any one of the three preceding claims, wherein the second support (3) has an inner face (31) facing the force-absorbing structure (50) and an outer face (32) opposite the inner face (31) and wherein said centre of rotation (60) is located between the inner (31) and outer (32) faces.

**9.** The hexapod system (1) according to any one of the four preceding claims, wherein said centre of rotation (60) of the ball joint connection formed by the second support (3) and the force-absorbing structure (50) is located at the centre of a circle formed by the ball joint connections (41, 42) by which the linear actuators (10) are articulated on the second support (3).

**10.** The hexapod system (1) according to any one of the preceding claims, wherein the force-absorbing structure (50) is embedded on the first support (2) at the centre of a circle formed by the ball joint connections (43, 44) by which the linear actuators (10a .., 10f) are articulated on the first support (2).

**11.** The hexapod system (1) according to any one of the preceding claims, wherein the force-absorbing structure (50) has a first end at which the force-absorbing structure (50) is embedded on the first support (2) and a second end at which the force-absorbing structure (50) is coupled to the second support (3) by a ball joint (51, 52) and wherein the first and second ends of the force-absorbing structure (50) are integral.

12. The hexapod system (1) according to any one of the preceding claims, comprising a single force-absorbing structure (50).

13. The hexapod system (1) according to any one of the preceding claims, wherein the force-absorbing structure (50) includes a hollow tube (55) carrying a hollow ball joint (51), wherein the connector (21a, 21b) is hollow in its centre, the system being configured so as to provide a passage channel (61) passing through the force-absorbing structure (50) and the first and second supports (2, 3)

14. An inspection and/or repair robot **characterised in that** it comprises a poly-articulated arm equipped with a plurality of hexapod systems (1) according to any one of the preceding claims and wherein the hexapod systems (1) are disposed in series.

15. The robot according to the preceding claim, also comprising at least one cable or at least one conduit passing through all the hexapod systems (1) passing through their passage channel (61).

Fig. 1

104

110 104

103

110

102

M'

R'

104

$\frac{\pi}{2} - \alpha$

Fig. 2

Fig. 3

Fig. 4

Fig. 5

Fig. 6

EP 2 928 650 B1

Fig. 7

22

Fig. 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20120048156 A
- US 20090314119 A
- US 4848179 A